# EUROPEAN PATENT APPLICATION

(11) **EP 2 650 795 A1**
(43) Date of publication of application: **16.10.2013**
(21) Application number: 12164190.6
(22) Date of filing: 13.04.2012
(51) Int. Cl.: G06F 12/08, H04L 29/08

(54) **Content delivery and caching system**

(71) Applicant: Integrity Digital Solutions, LLC., Temple, TX 76502 (US)
(72) Inventor: Elliott, Jeremiah, Temple, TX 76502 (US)
(74) Representative: KATZAROV S.A.

(57) **Abstract**

The present invention provides a method and system for managing data exchange between a remote server and a client on a local area network (LAN). The invention includes a caching system within the LAN that stores data for immediate access by clients at maximum available bandwidth on the LAN. Data stored on the remote server is downloaded to the cache system in advance of use by the client, thereby avoiding potential bandwidth bottlenecks from the client retrieving such data directly from the server in real time. Conversely, data uploaded from the client to the remover server is first uploaded to the cache system at maximum LAN bandwidth to minimize client upload times. The cache system subsequently uploads the data to the remote server at available Internet bandwidth with no perceived delay from the standpoint of the client.

## Description

### Technical Field

The present invention relates generally to Internet data transmission and more specifically to increasing content delivery speed by means of caching operations.

### Background of the Invention

In recent years many businesses and other organizations have increasingly utilized data storage on remote servers accessed via the Internet. With the continually dropping costs of data storage and bandwidth, online data storage has become a more economic option for such organizations and will continue to become economic for an increasing number of potential users.

The advantages of online data storage are many. They include backup and safety by protecting data from local problems (e.g., office fires, electrical surges/lightning strikes, etc.). Another advantage is alleviating users from the need to continually manage and update local data storage capacities.

However, online data storage on remote servers has its disadvantages, mostly related to retrieving the data from those remote servers. While the availability of broadband Internet access has increased dramatically over the last five to ten years the bandwidth available over the Internet is still a fraction of that available to Ethernet based Local Area Networks (LAN). As a result, despite the advantages of online data storage versus local storage, the speeds with which data can be accessed over the Internet present a bottleneck that partially offsets those advantages.

### Summary of the Invention

The present invention provides a method and system for managing data exchange between a remote server and a client on a local area network (LAN). The invention includes a caching system within the LAN that stores data for immediate access by clients at maximum available bandwidth on the LAN. Data stored on the remote server is downloaded to the cache system in advance of use by the client, thereby avoiding potential bandwidth bottlenecks from the client retrieving such data directly from the server in real time. Conversely, data uploaded from the client to the remover server is first uploaded to the cache system at maximum LAN bandwidth to minimize client upload times. The cache system subsequently uploads the data to the remote server at available Internet bandwidth with no perceived delay from the standpoint of the client.

The present invention provides in particular a method for maximum utilization of bandwidth for data transfer in a local area network (LAN), the method comprising (a) providing a local caching system within the LAN; (b) for data uploads: (i) uploading data from a client in the LAN to the caching system at the LAN's maximum available bandwidth, wherein the data is immediately available for access on the LAN, and (ii) subsequently uploading the data from the caching system to a remote server at available Internet bandwidth, thereby minimizing upload lag on the client side; and (c) for data downloads: (i) pre-caching data from a remote server to the caching system at available Internet bandwidth in advance of requests for the data, and (ii) in response to a request for the data from a client in the LAN, downloading the data from the caching system to the client at the LAN's maximum available bandwidth.

In embodiments, step (b) further comprises sending metadata associated with the data directly to the remote server when the data is uploaded to the cache system and updating the metadata on the remote server when the uploading of the data from the cache system to the remote server is complete.

In embodiments, the method further comprises determining if requested data is pre-cached in the caching system, and if the requested data is not in the caching system, downloading the requested data directly from a remote server to a client at available Internet bandwidth.

In embodiments, pre-caching data from the remote server further comprises: periodically polling the remote server for new content; receiving IDs for any new content from the remote server in response to the polling; and downloading the new content to the caching system.

Pre-caching data from the remote server is for example performed in advance of pre-scheduled data requests.

The present invention also provides in particular a system for maximum utilization of bandwidth for data transfer in a local area network (LAN), the system comprising: (a) a local caching system within the LAN; (b) for data uploads: (i) a LAN communications link for uploading data from a client in the LAN to the caching system at the LAN's maximum available bandwidth, wherein the data is immediately available for access on the LAN, and (ii) an Internet communications link for subsequently uploading the data from the caching system to a remote server at available Internet bandwidth, thereby minimizing upload lag on the client side; and (c) for data downloads: (i) a pre-caching mechanism that fetches data from a remote server to the caching system at available Internet bandwidth in advance of requests for the data, and (ii) in response to a request for the data from a client in the LAN, a LAN communications link for downloading the data from the caching system to the client at the LAN's maximum available bandwidth.

In embodiments, means (b) further comprises a communications link for sending metadata associated with the data directly to the remote server when the data is uploaded to the cache system and updating the metadata on the remote server when the uploading of the data from the cache system to the remote server is complete.

In embodiments, the system further comprises a client application for determining if requested data is pre-cached in the caching system, and if the requested data is not in the caching system, downloading the requested data directly from a remote server to a client at available Internet bandwidth.

In embodiments, the means for pre-caching data from the remote server further comprises: a polling mechanism in the caching system that periodically polls the remote server for new content; a communications link for receiving IDs for any new content from the remote server in response to the polling; and a communications link for downloading said new content to the caching system.

### Brief Description of the Drawings

The invention, as well as a preferred mode of use, further objects and advantages thereof, will best be understood by reference to the following detailed description of an illustrative embodiment when read in conjunction with the accompanying drawings, wherein:
Figure 1 is a block diagram that shows the basic structure of a caching mechanism in accordance with the present invention;
Figure 2 is a flowchart showing the process of uploading content using the caching system of the present invention;
Figure 3 is a flowchart showing the process of downloading content using the caching system of the present invention;
Figure 4 is a flowchart showing a cache loading process in accordance with the present invention;
Figure 5 is a block diagram that illustrates caching options, depending on the source of new content;
Figure 6 is a flowchart illustrating the process of pre-caching data in advance of use in accordance with the present invention.

### Detailed Description of the Drawings

The present invention minimizes the effect of limited bandwidth available over the average Internet connection and delivers content to a client at the same speed as if the primary server was on a local area network. The invention accomplishes this goal with two primary mechanisms: a caching mechanism, and a pre-caching routine.

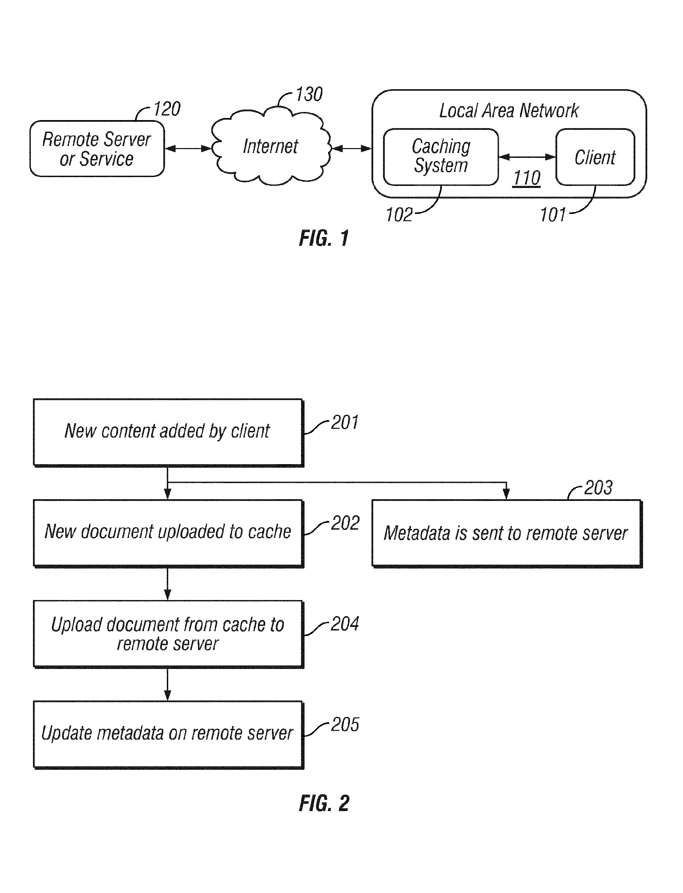

Figure 1 is a block diagram that shows the basic structure of a caching mechanism in accordance with the present invention. The caching mechanism is a computer device 102 containing storage capacity, which resides on a local area network (LAN) 110. It facilitates fast downloads and uploads of any file that the client 101 may require.

When the client 101 needs a file, the client application requests the file from the cache 102. In the case of a cache hit, the data is returned to the client directly over a communications link in the LAN infrastructure at maximum available bandwidth. When the client 101 needs to save or upload a new file, the file is actually sent to the local cache 102 over a LAN communications link at the maximum available bandwidth, which allows for uploads of large files that seem faster. Once the cache 102 has received the file it will in turn upload the file to a remote server 120 via the Internet 130 at available bandwidth for permanent storage. When there is a cache miss or the cache 101 is simply unavailable, the client system uploads or downloads directly from the remote server 120 via the Internet.

Figure 2 is a flowchart showing the process of uploading content using the caching system of the present invention. The process begins by adding new content to the system via a client in the LAN (step 201). When the client uploads the content via the LAN, the document itself is actually uploaded to the caching system (step 202). From the point of view of the client, the upload is complete at this point. In addition, once a document is uploaded to the cache in step 202, it is immediately available for download to any other host on the local network at LAN bandwidths.

Concurrently with the upload to the local caching system, metadata associated with the document is sent directly to the remote server via the Internet (step 203).

After the document upload to the caching system is complete, the caching system then initiates an upload to the remote server via the Internet at available bandwidth (step 204). After the document is uploaded to the remote server, the associated metadata (previously sent in step 203) is updated to reflect the upload is complete.

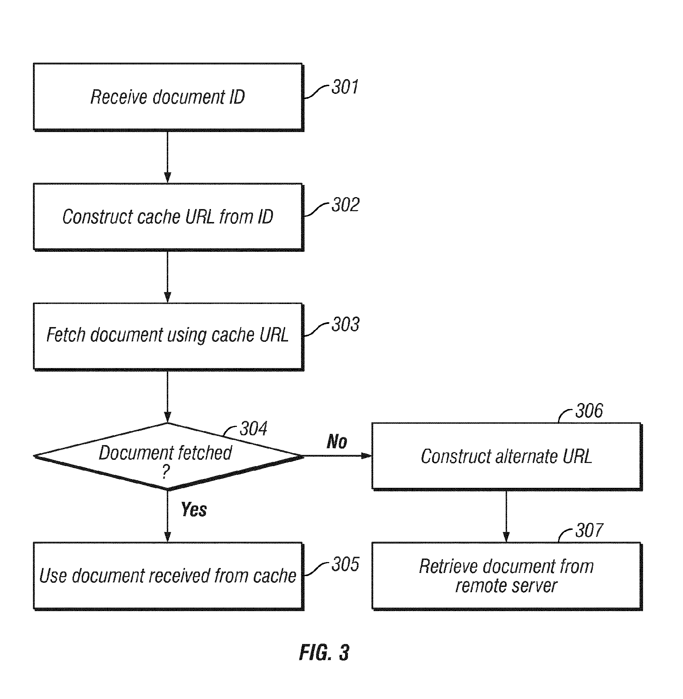

Figure 3 is a flowchart showing the process of downloading content using the caching system of the present invention. The process is initiated by providing the application with the ID of a document (step 301). The application then constructs a cache Uniform Resource Locator (URL) from the ID which it uses to send a fetch request to the caching system (step 302).

The client application will initially attempt to download the document from the cache system (step 303). If it is determined in step 304 that the document is available, it is downloaded from the cache via the LAN (step 305). If the document is not available via the cache URL, the application will then construct an alternate URL for the given ID (step 306) and fetch the document directly from the remote server via the Internet (Step 307).

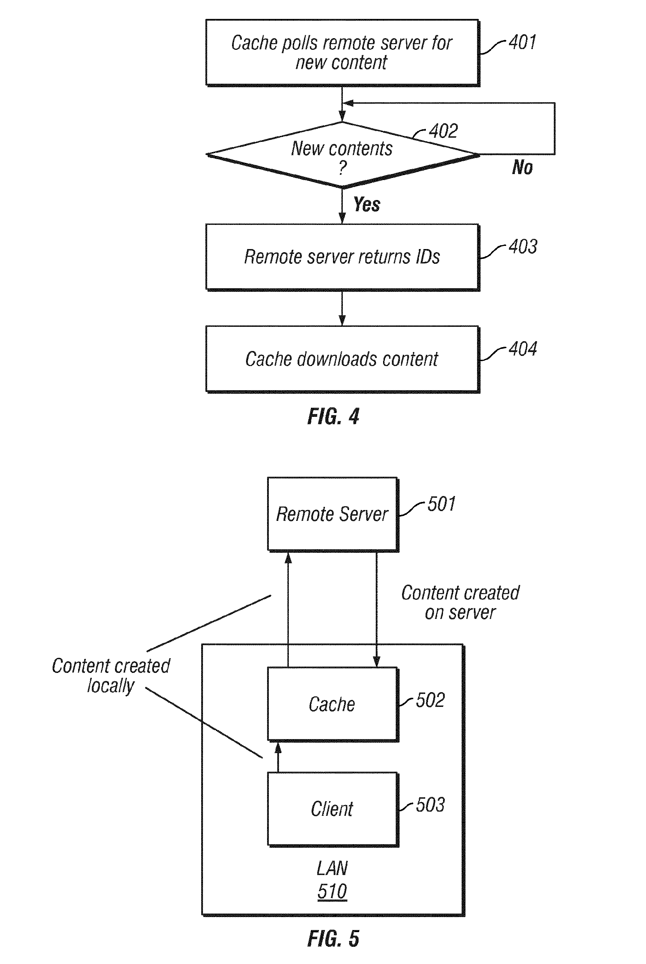

Figure 4 is a flowchart showing a cache loading process in accordance with the present invention. The cache system has a polling mechanism that periodically polls the remote server based on configured settings (step 401) and determines if there is any new content that needs to be added to the cache (step 402). If there is no new content, the cache system will simply continue polling periodically according to the set parameters.

If there is new content on the remote server, the server returns a list of IDs that need to be added to the cache system (step 403). Using these IDs, the cache system begins downloading and caching the new content from the remote server for use on the local network (step 404).

Figure 5 is a block diagram that illustrates caching options, depending on the source of new content. When new content is created via a client, it is loaded into the cache over the local network (becoming immediately available to the LAN) then pushed to the remote server. Conversely, content that is generated on the server is pushed down to the cache upon completion. In the case of scheduled needs for server content, the content in question can be pushed down to the cache in advance of scheduled use before it is required on the local network.

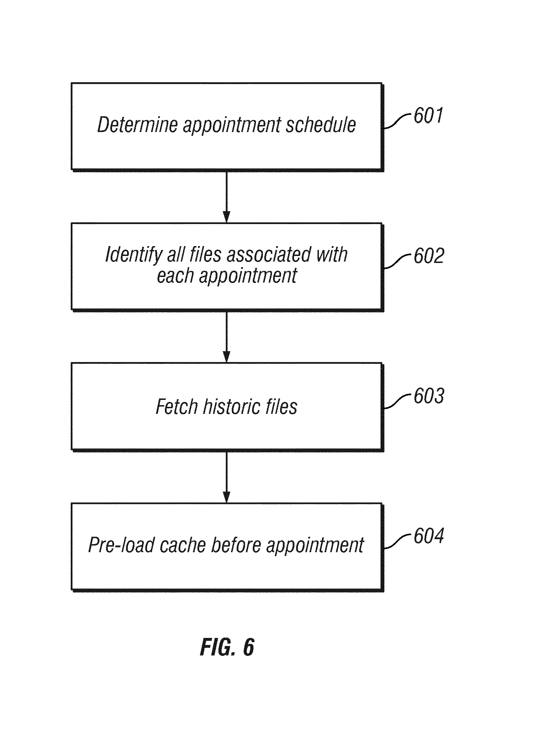

The process of pre-caching content is shown in the flowchart of Figure 6. The process begins with the establishment of an appointment or use schedule that identifies specific matters or client appointments within a given time frame (step 601). One example is a roster of patient appointments scheduled for the following business day of a medical practice. Other examples include client appointments for law firms, financial planners, architects, etc., or they may simply include work projects scheduled in advance. The common denominator is the need to retrieved larges volumes of content from the remote server(s) within the scheduled time frame (e.g., hour, day, week, etc.). This might be a product of large amounts of content for each matter and/or a large number of matters.

After the appointment schedule is determined, all historic files associated with each appointment/matter on the schedule are identified (step 602). A pre-caching mechanism fetches the files from the remote server(s) (step 603) and loads them into the cache in advance of the scheduled time period in question.

This pre-caching avoids the need to retrieve large volumes of content in real time and the potential problems resulting from bandwidth limitations during communication with remote servers.

Using the example of a medical practice, there several events that could trigger a cache load. For example:
1. The primary method of cache loading will be to look at the Doctor's schedule for the next day. All files associated with every encounter for each patient on the schedule will be sent to the cache via http.
2. When a patient is scheduled for a visit on the current day, the cache will be loaded with all historic files associated with that patient.
3. If a doctor starts an unscheduled appointment, the cache will load all historic files for the patient in question.

In each example, the medical staff does not have to retrieve files from the remote server during the appointment, thereby minimizing delays. Obviously, more advance notice allows for quicker and more efficient pre-caching, but when one considers the tight time schedules of most medical practices, even modest improvements in data access speeds across multiple appointments can have a significant cumulative effect on time management.

The description of the present invention has been presented for purposes of illustration and description, and is not intended to be exhaustive or limited to the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated. It will be understood by one of ordinary skill in the art that numerous variations will be possible to the disclosed embodiments without going outside the scope of the invention as disclosed in the claims.

## Claims

1. Method for maximum utilization of bandwidth for data transfer in a local area network (LAN), the method comprising:
(a) providing a local caching system within said LAN;
(b) for data uploads:
(i) uploading data from a client in the LAN to said caching system at the LAN's maximum available bandwidth, wherein said data is immediately available for access on the LAN, and
(ii) subsequently uploading said data from the caching system to a remote server at available Internet bandwidth, thereby minimizing upload lag on the client side; and
(c) for data downloads:
(i) pre-caching data from a remote server to said caching system at available Internet bandwidth in advance of requests for said data, and
(ii) in response to a request for said data from a client in the LAN, downloading the data from the caching system to the client at the LAN's maximum available bandwidth.

2. Method according to claim 1, wherein step (b) further comprises sending metadata associated with the data directly to the remote server when the data is uploaded to the cache system and updating said metadata on the remote server when the uploading of the data from the cache system to the remote server is complete.

3. Method according to claim 1 or 2, further comprising determining if requested data is pre-cached in said caching system, and if said requested data is not in the caching system, downloading said requested data directly from a remote server to a client at available Internet bandwidth.

4. Method according to one of claims 1 to 3, wherein pre-caching data from the remote server further comprises:
periodically polling the remote server for new content;
receiving IDs for any new content from the remote server in response to the polling; and
downloading said new content to the caching system.

5. Method according to one of claims 1 to 4, wherein pre-caching data from the remote server is performed in advance of pre-scheduled data requests.

6. System for maximum utilization of bandwidth for data transfer in a local area network (LAN), the system comprising:
(a) a local caching system within said LAN;
(b) for data uploads:
(i) a LAN communications link for uploading data from a client in the LAN to said caching system at the LAN's maximum available bandwidth, wherein said data is immediately available for access on the LAN, and
(ii) an Internet communications link for subsequently uploading said data from the caching system to a remote server at available Internet bandwidth, thereby minimizing upload lag on the client side; and
(c) for data downloads:
(i) a pre-caching mechanism that fetches data from a remote server to said caching system at available Internet bandwidth in advance of requests for said data, and
(ii) in response to a request for said data from a client in the LAN, a LAN communications link for downloading the data from the caching system to the client at the LAN's maximum available bandwidth.

7. System according to claim 6, wherein means (b) further comprises a communications link for sending metadata associated with the data directly to the remote server when the data is uploaded to the cache system and updating said metadata on the remote server when the uploading of the data from the cache system to the remote server is complete.

8. System according to claim 6 or 7, further comprising a client application for determining if requested data is pre-cached in said caching system, and if said requested data is not in the caching system, downloading said requested data directly from a remote server to a client at available Internet bandwidth.

9. System according to one of the claims 6 to 8, wherein the means for pre-caching data from the remote server further comprises:
a polling mechanism in said caching system that periodically polls the remote server for new content;
a communications link for receiving lDs for any new content from the remote server in response to the polling; and
a communications link for downloading said new content to the caching system.
